# EUROPEAN PATENT APPLICATION

(11) **EP 4 216 088 A1**
(43) Date of publication of application: **26.07.2023**
(21) Application number: 22152619.7
(22) Date of filing: 21.01.2022
(51) Int. Cl.: G06F 21/57

(54) **EXTENDED SECURE BOOT FOR LAUNCHING A VIRTUAL MACHINE**

(71) Applicant: Cysec SA, 1015 Lausanne (CH)
(72) Inventor: Karlov, Alexandre, 1015 Lausanne (CH)
(74) Representative: KATZAROV S.A.

(57) **Abstract**

The present relates to a method for launching a virtual machine supported in a processing unit of a cloud compute engine named secure enclave comprising
uploading an operating system disk image on said enclave, said image comprising a boot bundle and at least one encrypted partition,
generating a virtual image on said enclave by using secure boot,
booting a virtual machine and launching said virtual machine image in the secure enclave.

The secure boot comprises the upload of a secure boot keys module on the cloud compute engine so that the secure boot further comprises
generating a virtual machine image comprising secure boot key provided by secure boot key module and a partition key provided by a partition key module,
authenticating the boot bundle by using the secure boot key,
booting the virtual machine by decrypting the encrypted partitions using partitions key.

## Description

### Technical Field

The present disclosure relates to a method for launching a virtual machine by using an extended secure boot.

The present invention relates to a computer program and to a computer device for carrying out the method of according to the present invention.

### Background of the art

Cloud infrastructure drives innovation by allowing companies to easily aggregate, analyze and share sensitive data whether at enterprise or consumer levels. However, cloud-based services also face issues regarding their security, making it hard for organizations and citizens to embrace them.

Cloud service providers offer encryption services for the protected data at rest and the data in transit. Data at rest refers to the information in storage along with those present in databases. On the other hand, the data in transit account for the info that is moving over a network connection.

To counter these threats, the research community, as well as industry, proposed new approaches to allow securing cloud computing when confronted with an untrusted cloud provider, these new approaches being called Confidential Computing.

Confidential computing enables data protection during processing. This technology also offers end-to-end data security in the cloud, when combined with storage, i.e. to secure data at rest, and network encryption, i.e. to secure data in transit.

Confidential computing is a cloud computing technology that isolates sensitive data in a protected computer processing unit (CPU) enclave during processing. CPU enclaves are hardware-based features providing security and privacy and include as an example SGX (Software Guard Extensions), SEV (Secure Encrypted Virtualization), Trustzone and Nitro. The contents of the enclave - the data being processed, and the techniques that are used to process it - are accessible only to authorized programming code, and are invisible and unknowable to anything or anyone else, including the cloud provider.

Accordingly, what is needed is an improved approach for isolating the data owner workloads from the cloud provider infrastructure thus securing data during processing and ensuring data integrity.

More precisely, even though more and more Cloud providers are adopting Confidential Computing solutions based on enclave technologies, there is still a need to ensure that such environments are providing all the security measures when a Virtual Machine or encrypted environment is launched.

### Summary of the invention

The above problems are solved by the apparatus and the method according to present invention.

The invention concerns a method for launching a virtual machine supported in a processing unit of a cloud compute engine named secure enclave, the method comprising
uploading an operating system disk image on said enclave, said image comprising a boot bundle and at least one encrypted partition,
generating a virtual machine image on said enclave by using secure boot,
booting a virtual machine and launching said virtual machine image in the secure enclave,
characterized in that the secure boot comprises the upload of a secure boot keys module on the cloud compute engine so that the secure boot further comprises
generating a virtual machine image comprising secure boot key provided by the secure boot key module and a partition key provided by a partition key module,
authenticating the boot bundle by using the secure boot key,
booting the virtual machine by decrypting the encrypted partitions using partitions key.

In another aspect, the invention concerns a computer program comprising instructions which, when the program is executed by a computer, cause the computer to carry out method according to the present invention.

In another aspect, the invention relates to an apparatus comprising means for carrying out the method of according to the present invention.

### Description of the invention

The invention concerns a method for launching a virtual machine supported in a processing unit of a cloud compute engine named secure enclave, the method comprising
uploading an operating system disk image on said enclave, said image comprising a boot bundle and at least one encrypted partition,
generating a virtual machine image on said enclave by using secure boot,
booting a virtual machine and launching said virtual machine image in the secure enclave,
characterized in that the secure boot comprises the upload of a secure boot keys module on the cloud compute engine so that the secure boot further comprises
generating a virtual machine image comprising secure boot key provided by the secure boot key module and a partition key provided by a partition key module,
authenticating the boot bundle by using the secure boot key,
booting the virtual machine by decrypting the encrypted partitions using partitions keys

In the present invention, the secure boot starts by authenticating the boot bundle with the secure boot keys provisioned in the enclave. This allows to control the access to the secure enclave to check the integrity of the operating system, preferably of the boot bundles of the operating system for instance the kernel. In other words, if a modified/corrupted version of the operating system disk image is uploaded in the secure enclave by a unauthorized party, the booting process will stop here.

Overall, the present invention focuses on providing a hardened operating system leveraging cloud infrastructure hardware elements to expose security features to application workloads. By realizing such operation, the end-user benefits from a full confidential environment from the launch to the execution without having to trust the cloud provider

Preferably, after the decryption of the encrypted partition by using the partition key, the method further comprises a key rotation step that comprises
generating new partitions key provisioned by a key generator,
encrypting the partition with said new partitions key for the following virtual machine launch,
reboot and launching said virtual machine in the secure enclave by using the new partition key and the secure boot key.

Therefore, after the first ignition or booting of the virtual machine image, the partitions are encrypted by specific keys, namely partitions keys, provisioned by a key generator. Advantageously, the key generator is located on the enclave. This allows to further increase the security of the extended secure boot.

Preferably, the key generator is chosen among trusted platform module TPM, virtual trusted platform module vTPM, a recovery key module either hardware based or software based

Preferably the key generator is compliant to NIST SP 800-90 B or similar.

In a preferred embodiment the method further comprises
checking the signature of the operating system disk image and if the signature check fails, the secure boot is cancelled.

This step ensures that the operating system image has not been corrupted or tampered with.

Preferably, the method further comprises creating at least a cluster on said enclave to deploy at least a workload using said virtual machine. Preferably, the method further comprises joining an existing cluster on said enclave to deploy at least a workload using said virtual machine.

In a preferred embodiment the boot bundle comprises at least one file chosen among an initramfs and a kernel. This step ensures the authenticity of initramfs and of the kernel and ensures that the boot bundle has not been tampered with.

Preferably, the at least one partitions is chosen among Extensible firmware Interface EFI, system partition SYS, LUKS partition, data partition DATA

In a preferred embodiment, the operating system disk image comprises Extensible firmware Interface EFI, system partition SYS and data partitions.

This partitioning structure enables to segregate by design the system files provided from the application owner and user data. This is particularly relevant for enabling smooth and easy back-ups, the addition of new clusters and nodes.

Preferably, the secure boot comprises an unified extensible firmware interface UEFI functionality.

Preferably, the secure boot key module is an unified extensible firmware interface UEFI.

This advantageously enables to store keys and authenticate sub-parts of the secure boot.

In a preferred embodiment, the UEFI functionality is operated by an open virtual machine firmware OVMF.

In this embodiment, OVMF is a virtualization and emulation of the UEFI functionalities. This is particularly relevant for deployment through cloud providers platforms and services.

In another aspect, the invention further relates to a computer program comprising instructions which, when the program is executed by a computer, cause the computer to carry out method according to the present invention.

The particular advantages of the computer program are similar to the ones of the method of the invention and will thus not be repeated here.

In another aspect, the invention also relates to an apparatus comprising means for carrying out the method of according to the present invention.

The particular advantages of the apparatus, in other words a computer device, are similar to the ones of the method of the invention and will thus not be repeated here.

As used herein, the word "means" (singular or plural) preceded or followed by a function can be replaced by the word "unit" or" module".

The embodiments describe for the method also apply to the apparatus and to the computer program according to the present invention mutatis mutandis.

### Brief description of the drawings

Further particular advantages and features of the invention will become more apparent from the following non-limitative description of at least one embodiment of the invention which will refer to the accompanying drawings, wherein
- Figures 1 and 2 represent the extended secure boot according to the present invention;
- Figures 3 represents the implementation of the extended secure boot according to the present invention in the context of confidential Virtual Machine;
- Figure 4 represents the implementation of the extended secure boot according to the present invention in the context of confidential Virtual Machine on a cloud provider infrastructure.

### Detailed description of the invention

The present detailed description is intended to illustrate the invention in a non-limitative manner since any feature of an embodiment may be combined with any other feature of a different embodiment in an advantageous manner.

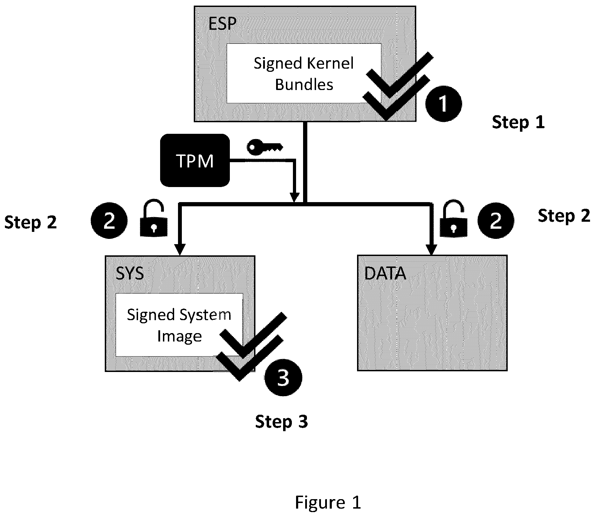

Figure 1 describes an embodiment of an extended secure boot according to the present invention after the first ignition of the virtual machine, which is most of all composed of three steps.

In a first step, the boot chain starts by verifying the authenticity and integrity of the boot bundle. In this example, the boot bundle comprises a signed kernel bundles stored in ESP. In a specific embodiment ESP can follow the systemd-boot specifications and contains the signed kernel bundles used to start the boot chain.

In a second step, the partitions of the disk are encrypted by partitions keys provided by a key generator, herein a vTPM. When the kernel is booted, the control flow is passed to "initramfs" which will unlock the partitions SYS and DATA using the partition keys outputted by the TPM. A recovery key (i.e. a partition key module) can be used instead of the TPM key (recovery key).

In this embodiment, the extended secure boot comprises, in a third and last step. Once SYS is decrypted, the extended secure boot will check the signature of Operating System image, which is stored as a signed compressed filesystem. If the signature check fails then the image is corrupted and has been tampered with.

In this embodiment, the system partition SYS is encrypted with dm-crypt . A LUKS header is used to store 2 keys:
1. primary key used in combination with a TPM either virtualized or physical
2. secondary key used for recovery, usually split into shares

In most of the cases, during a boot the TPM will output the key. If it is not the case the "key device" (i.e. the partition key module or recovery key module) will be used as a backup. If none works the boot process will stop and partitions will remain encrypted.

In the present embodiment, all system and user data are stored in the DATA partition. Backups of this partition can be done to prevent data loss. It also contains BTRFS subvolumes that are used to hold on to various types of data, mainly the writable parts of the system (/etc and /var overlays).

Similarily to the SYS partition, the DATA partition is unlocked using the TPM or a recovery key module as key generator after the key rotation.

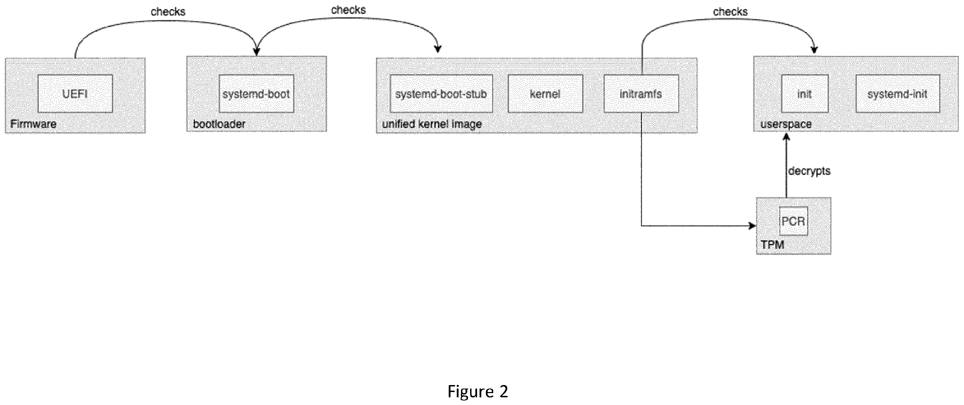

Figure 2 represents another embodiment of the secure boot according to the present invention. In this embodiment, the secure boot module comprises a UEFI as a firmware. This UEFI is used to check and enables the secure boot of the bootloader

In this specific embodiment, the ESP comprises systemd-boot as bootloader that checks the system-boot stub and the kernel with the secure boot keys. Systemd-boot will find the default kernel bundle or show the boot menu and pass the control flow to the stub. Secure boot is activated and used to authentify kernel bundles. Here more precisely, Systemd-boot allows easy support of signed secure boot UEFI bundle.

Then, when the kernel is booted, the control flow is passed to "initramfs" which will unlock the partitions SYS and DATA using the partition keys outputted by the TPM. When the initramfs is done, the kernel switches the filesystem root and executes the second stage, the initialization.

The TPM is used to auto-unlock the SYS and DATA partition during the first stage of the initramfs. Specific TPM registers state (like secure boot state, dba bd dbx state, etc.) are used to encrypt the primary LUKS key. With this mechanism, disks can be decrypted only when a trusted kernel is booted.

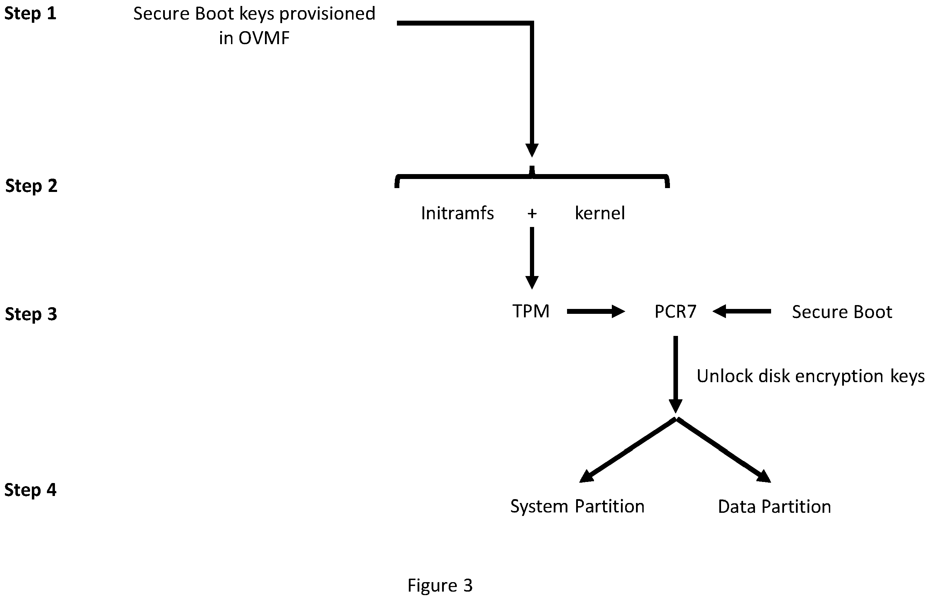

Figure 3 relates to the method implementation of the extended secure boot according to the present invention in the context of confidential ( i.e. enclave based) VM launch after the first ignition of the VM.

In a first step the secure boot keys are provisioned in OVMF which enables UEFI support for Virtual Machines in cloud context.

In a second step the OS is initialized through the initramfs and kernel modules. When kernel is booted the control flow is passed to our first stage init: the initramfs. The initramfs is responsible to unlock SYS and DATA partitions. The OS may use an A/B scheme for system updates, which means the boot chain has to figure out which version of the system has to start. When the initramfs is done, the kernel switches the filesystem root and executes the second stage init. This second stage init is responsible to mount /etc and /var as RW, by overlaying correct RW btrfs subvolumes present in the DATA partition.

In a third step Secure boot is used to verify integrity and authenticity of the the OS image. System provider public keys are placed in [pk], [kek], and [db] UEFI secure boot keystores. systemd-boot will ensure that only valid signed bundles, in regards of db and dbx , are booted. systemd-boot is itself signed by System provider key. Any updates of db and dbx from a booted system require [pk] or [kek] signatures. With this mechanism the platform ensures that only trusted kernels must be able to boot.

In this context the TPM is used to auto-unlock the SYS and DATA partition during the first stage init inside the initramfs. Some TPM registers state are used to encrypt the primary LUKS key. Registers like secure boot state, db and dbx state, etc. With this mechanism disks can be decrypted only when a trusted kernel is booted.

In a fourth step partition encryption keys are unlocked in order to decrypt and map disk layout with at least two partitions: (1) system and (2) data.

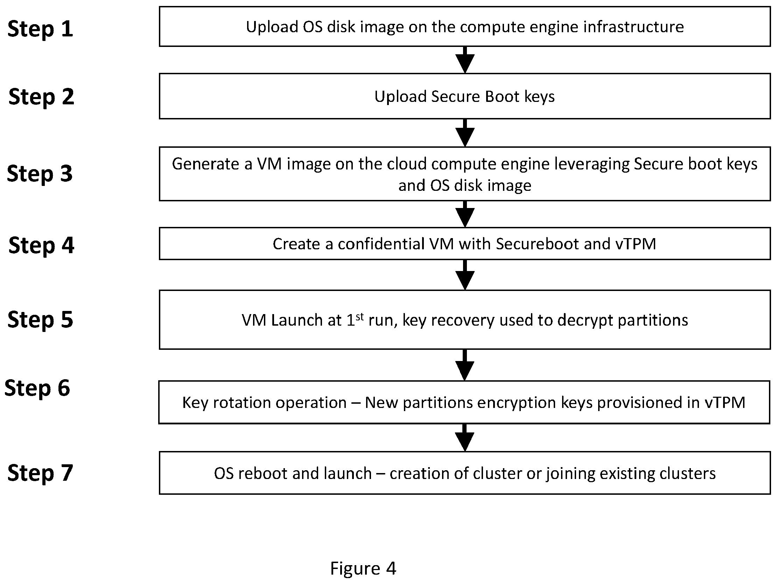

Figure 4 relates to the method implementation in the context of confidential VM launch in an enclave on a Cloud provider infrastructure.

In a 1^{st} step, the method consists in initiating and uploading and OS image on the enclave to the cloud infrastructure.

In a 2^{nd} step, the system provider secure boot keys are uploaded in OVMF.

In a 3^{rd} step, the user generates a VM image on the Cloud compute engine exploiting the secure boot keys loaded previously in OVMF and OS image disk. Preferably, steps 2 and 3 are perfomed in a single step.

In a 4^{th} step it is to mention that the compute infrastructure enables confidential VM launch as well as secure boot (as an example through TPM or Virtual TPM).

In a 5^{th} step, when the confidential VM is launched for the first time, the partitions keys are used to decrypt partitions and access VM.

In a 6^{th} step, the user proceeds with key rotation to encrypt the partitions with new partitions keys provisioned in the vTPM. This step enable user to benefit from customized keys.

In a last step, the user can fully benefit from the features of the invention through the OS reboot and launch. With this user is capable to create clusters or join existing clusters where sensitive workloads are deployed on confidential VMs.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

## Claims

1. Method for launching a virtual machine supported in a processing unit of a cloud compute engine named secure enclave, the method comprising
uploading an operating system disk image on said enclave, said image comprising a boot bundle and at least one encrypted partition,
generating a virtual machine image on said enclave by using secure boot,
booting a virtual machine and launching said virtual machine image in the secure enclave,
**characterized in that** the secure boot comprises the upload of a secure boot keys module on the cloud compute engine so that the secure boot further comprises
generating a virtual machine image comprising secure boot key provided by secure boot key module and a partition key provided by a partition key module,
authenticating the boot bundle by using the secure boot key,
booting the virtual machine by decrypting the encrypted partitions using partitions key.

2. Method according to claim 1, wherein, after the decryption of the encrypted partition by using the partition key, the method further comprises a key rotation step that comprises
generating new partitions key provisioned by a key generator,
encrypting the partition with said new partitions key for the following virtual machine launch,
reboot and launching said virtual machine in the secure enclave by using the new partition key and the secure boot key.

3. Method according to the preceding claim, wherein the key generator is chosen among trusted platform module TPM, virtual trusted platform module vTPM, a recovery key module either hardware based or software based.

4. Method according to any one of claims 1 to 3, wherein the method further comprises
Checking the signature of the operating system disk image and if the signature check fails, the secure boot is cancelled.

5. Method according to any one of claims 1 to 4, wherein the method further comprises creating at least a cluster on said enclave to deploy at least a workload using said virtual machine.

6. Method according to any one of claims 1 to 4, wherein the method further comprises joining an existing cluster on said enclave to deploy at least a workload using said virtual machine.

7. Method according to any one of claims 1 to 6, wherein the boot bundle comprises at least one file chosen among an initramfs and a kernel.

8. Method according to any one of claims 1 to 7, wherein said at least one partitions is chosen among Extensible firmware Interface EFI, system partition SYS, LUKS partition, data partition DATA.

9. Method according to the preceding claim, wherein the operating system disk image comprises Extensible firmware Interface EFI, system partition SYS and data partitions.

10. Method according to any one of claims 1 to 9, wherein the secure boot comprises an unified extensible firmware interface UEFI functionality, preferably the secure boot key module is an unified extensible firmware interface UEFI.

11. Method according to the preceding claim, wherein the UEFI functionality is operated by an open virtual machine firmware OVMF.

12. A computer program comprising instructions which, when the program is executed by a computer, cause the computer to carry out method according to any one of claims 1 to 11.

13. An apparatus comprising means for carrying out the method of according to any one of claims 1 to 11.
